# EUROPEAN PATENT APPLICATION

(11) **EP 4 228 182 A1**
(43) Date of publication of application: **16.08.2023**
(21) Application number: 20956553.0
(22) Date of filing: 10.10.2020
(51) Int. Cl.: H04L 1/18, H04L 5/00

(54) **PUCCH RESOURCE DETERMINATION METHOD AND APPARATUS**

(71) Applicant: Beijing Xiaomi Mobile Software Co., Ltd., Beijing 100085 (CN)
(72) Inventor: FU, Ting, Beijing 100085 (CN)
(74) Representative: dompatent von Kreisler Selting Werner - Partnerschaft von Patent- und Rechtsanwälten mbB
(86) International application number: PCT/CN2020/120224
(87) International publication number: WO 2022/073238

(57) **Abstract**

The embodiments of the present disclosure provide a PUCCH resource determination method and apparatus for transmission of HARQ-ACK feedback, a communication device and a computer storage medium. The PUCCH resource determination method for HARQ-ACK feedback is applied to user equipment (LTE), and comprises: receiving the DCI scheduling a plurality of PDSCH transmissions one time; and determining time slot positions of PUCCH resources according to time slot positions of the PDSCH transmissions and K1 value carried by the DCI, the PUCCH resources being used for sending HARQ-ACK feedback of the plurality of PDSCH transmissions.

## Description

### TECHNICAL FIELD

The disclosure relates to, but is not limited to, a field of wireless communication technologies, and in particular, to methods and apparatuses for determining a Physical Uplink Control Channel (PUCCH) resource for transmitting a Hybrid Automatic Repeat reQuest-Acknowledgement (HARQ-ACK) feedback, a communication device and a computer storage medium.

### BACKGROUND

Downlink Control Information (DCI) can be used for resource scheduling. For example, the DCI may be used for scheduling a Physical Downlink Shared Channel (PDSCH) and/or a Physical Uplink Shared Channel (PUSCH).

The feedback based on the Hybrid Automatic Repeat reQuest-Acknowledgement (HARQ-ACK) mechanism may be referred to as HARQ-ACK feedback.

### SUMMARY

Embodiments of the disclosure provide methods and apparatuses for determining a Physical Uplink Control Channel (PUCCH) resource for transmitting a Hybrid Automatic Repeat reQuest-Acknowledgement (HARQ-ACK) feedback, a communication device and a computer storage medium.

A first aspect of the embodiments of the disclosure provides a method for determining a PUCCH resource for transmitting a HARQ-ACK feedback, performed by user equipment (UE). The method includes:
receiving Downlink Control Information (DCI) for scheduling, in one shot, two or more Physical Downlink Shared Channels (PDSCHs); and
determining one or more slot positions of one or more PUCCH resources based on slot positions of the two or more PDSCHs and one or more K1 values carried by the DCI, in which the one or more PUCCH resources are configured to send HARQ-ACK feedbacks of the two or more PDSCHs.

A second aspect of the embodiments of the disclosure provides a method for determining a PUCCH resource for transmitting a HARQ-ACK feedback, performed by a base station. The method includes:
sending Downlink Control Information (DCI) for scheduling, in one shot, two or more Physical Downlink Shared Channels (PDSCHs); and
determining one or more slot positions of one or more PUCCH resources based on slot positions of the two or more PDSCHs and one or more K1 values carried by the DCI, in which the one or more PUCCH resources are configured to receive HARQ-ACK feedbacks of the two or more PDSCHs.

A third aspect of the embodiments of the disclosure provides an apparatus for determining a PUCCH resource for transmitting a HARQ-ACK feedback, applied to user equipment (UE). The apparatus includes:
a receiving module, configured to receive Downlink Control Information (DCI) for scheduling, in one shot, two or more Physical Downlink Shared Channels (PDSCHs); and
a first determining module, configured to determine one or more slot positions of one or more PUCCH resources based on slot positions of the two or more PDSCHs and one or more K1 values carried by the DCI, in which the one or more PUCCH resources are configured to send HARQ-ACK feedbacks of the two or more PDSCHs.

A fourth aspect of the embodiments of the disclosure provides an apparatus for determining a PUCCH resource for transmitting a HARQ-ACK feedback, applied to a base station. The apparatus includes:
a sending module, configured to send Downlink Control Information (DCI) for scheduling, in one shot, two or more Physical Downlink Shared Channels (PDSCHs); and
a second determining module, configured to determine one or more slot positions of one or more PUCCH resources based on slot positions of the two or more PDSCHs and one or more K1 values carried by the DCI, in which the one or more PUCCH resources are configured to receive HARQ-ACK feedbacks of the two or more PDSCHs.

A fifth aspect of an embodiment of the disclosure provides a communication device including a processor, a transceiver, a memory, and an executable program stored in the memory and executable by the processor. The processor is configured to perform a method according to the first aspect or the second aspect when executing the executable program.

A sixth aspect of the embodiments of the disclosure provides a computer storage medium having an executable program stored thereon. After the executable program is executed by a processor, a method according to the first aspect or the second aspect is performed.

With the technical solutions according to embodiments of the disclosure, in the scenario of multiple transmission time intervals, one DCI schedules multiple PDSCHs. On the one hand, compared with the technical solution that one DCI schedules one PDSCH, the technical solution according to the disclosure reduces the overhead of signaling scheduling of the PDSCHs. On the one hand, the one or more K1 values carried by the DCI are used to determine, in one shot, the one or more PUCCH resources for the two or more PDSCHs, and the one or more PUCCH resources are configured to transmit HARQ-ACK feedbacks of the two or more PDSCHs. Therefore, the DCI is used to not only realize the scheduling of the PDSCHs, but also realize the indication of the one or more PUCCH resources for transmitting the HARQ-ACK feedbacks, thereby further improving the signaling utilization of DCI.

It is understandable that the foregoing general description and the following detailed description are illustrative and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and together with the description and serve to explain the principles of the disclosure.
FIG. 1 is a schematic diagram illustrating a wireless communication system according to embodiments of the disclosure.
FIG. 2 is a schematic flowchart illustrating a method for determining a Physical Uplink Control Channel (PUCCH) resource for transmitting a Hybrid Automatic Repeat reQuest-Acknowledgement (HARQ-ACK) feedback according to embodiments of the disclosure.
FIG. 3 is a schematic diagram of scheduling two or more Physical Downlink Shared Channels (PDSCHs) using one Downlink Control Information (DCI) according to embodiments of the disclosure.
FIG. 4 is a schematic diagram of scheduling two or more PDSCHs using one DCI and transmitting HARQ-ACK feedbacks of two or more PDSCHs using a PUCCH resource according to embodiments of the disclosure.
FIG. 5 is a schematic diagram of scheduling two or more PDSCHs using one DCI and transmitting HARQ-ACK feedbacks of two or more PDSCHs using PUCCH resources according to embodiments of the disclosure.
FIG. 6 is a schematic diagram of scheduling two or more PDSCHs using one DCI and transmitting HARQ-ACK feedbacks of two or more PDSCHs using PUCCH resources according to embodiments of the disclosure.
FIG. 7 is a schematic flowchart illustrating a method for determining a PUCCH resource for transmitting a HARQ-ACK feedback according to embodiments of the disclosure.
FIG. 8 is a schematic diagram illustrating an apparatus for determining a PUCCH resource for transmitting a HARQ-ACK feedback according to embodiments of the disclosure.
FIG. 9 is a schematic diagram illustrating an apparatus for determining a PUCCH resource for transmitting a HARQ-ACK feedback according to embodiments of the disclosure.
FIG. 10 is a schematic diagram illustrating user equipment (LTE) according to embodiments of the disclosure.
FIG. 11 is a schematic diagram illustrating a base station according to embodiments of the disclosure.

### DETAILED DESCRIPTION

Embodiments will be described in detail herein, examples of which are illustrated in the accompanying drawings. In the following description related to the drawings, the same numerals in different drawings refer to the same or similar elements unless otherwise indicated. The implementations described in the following embodiments do not represent all implementations consistent with embodiments of the disclosure. Rather, they are merely examples of apparatus and methods consistent with some aspects of embodiments of the disclosure as recited in the appended claims.

The terms used in the embodiments of the disclosure are only for the purpose of describing particular embodiments, and are not intended to limit the embodiments of the disclosure. As used in the embodiments of the description and the appended claims, the singular forms "a," "an" are intended to include the plural forms as well, unless the context clearly dictates otherwise. It is understandable that the term "and/or" as used herein refers to and includes any one and all possible combinations of one or more of the associated listed items.

It is understandable that although the terms "first," "second," "third," etc. may be used in embodiments of the disclosure to describe various pieces of information, such information should not be limited to these terms. These terms are only used to distinguish the same type of information from each other. For example, the first information may also be referred to as the second information, and similarly, the second information may also be referred to as the first information without departing from the scope of the embodiments of the disclosure. Depending on the context, the word "if" as used herein can be interpreted as "at the time of" or "when" or "in response to determining."

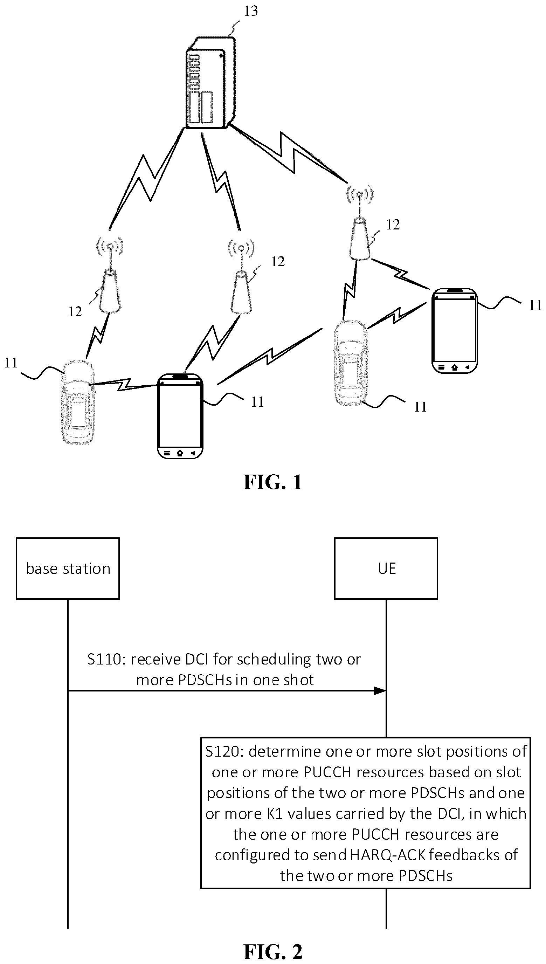

FIG. 1 is a schematic diagram illustrating a wireless communication system according to embodiments of the disclosure. As illustrated in FIG. 1, the wireless communication system is a communication system based on the cellular mobile communication technology. The wireless communication system may include several user equipment (UEs) 11 and several base stations 12.

The UE 11 may be a device that provides voice and/or data connectivity to the user. The LTE 11 may communicate with one or more core networks via a Radio Access Network (RAN). The LTE 11 may be an Internet of Thing (IoT) LTE, such as a sensor device, a mobile phone (or "cellular" phone), or a computer with an IoT UE, such as a fixed device, a portable device, a pocket device, a hand-held device, a computer built-in device or a vehicle-mounted device. For example, Station (STA), subscriber unit, subscriber station, mobile station, mobile, remote station, access point, remote terminal, access terminal, user terminal, user agent, user device, or user equipment (UE). Alternatively, the UE 11 may be a device of unmanned aerial vehicle. Alternatively, the UE 11 may be a vehicle-mounted device, such as a trip computer with a wireless communication function, or a wireless communication device externally connected to the trip computer. Alternatively, the UE 11 may be a roadside device, such as a street light, a traffic light, or other roadside devices with a wireless communication function.

The base station 12 may be a network-side device in the wireless communication system. The wireless communication system may be the 4th generation mobile communication (4G) system, also known as Long Term Evolution (LTE) system. Alternatively, the wireless communication system may be a 5th generation mobile communication (5G) system, also known as new radio (NR) system or 5G NR system. Alternatively, the wireless communication system may be a next-generation system of the 5G system. The access network in the 5G system may be called New Generation-Radio Access Network (NG-RAN). Alternatively, the wireless communication system can be a Machine Type Communication (MTC) system.

The base station 12 may be an evolved base station (eNB) of the 4G system. Alternatively, the base station 12 may be a base station (gNB) that adopts a centralized-distributed architecture of the 5G system. When adopting the centralized-distributed architecture, the base station 12 usually includes a central unit (CU) and at least two distributed units (DU). The central unit is provided with a protocol stack of Packet Data Convergence Protocol (PDCP), Radio Link Control (RLC), and Medium Access Control (MAC). The distributed unit is provided with a protocol stack of a physical (PHY) layer. Embodiments of the disclosure not limit the implementation form of the base station 12.

A wireless connection can be established between the base station 12 and the UE 11 through the wireless air interface. In different implementations, the wireless air interface can be based on the 4G or based on 5G. For example, the wireless air interface is the new radio, or the wireless air interface can be a wireless air interface based on the next-generation of the 5G.

In some embodiments, an E2E (End to End) connection can be established between UEs 11. For example, Vehicle to Vehicle (V2V) communication, Vehicle to Infrastructure (V2I) and Vehicle to Pedestrian (V2P) communication in the Vehicle to Everything (V2X) communication.

In some embodiments, the above wireless communication system may also include a network management device 13.

The base stations 12 are respectively connected to the network management device 13. The network management device 13 may be a core network device in the wireless communication system. For example, the network management device 13 may be a Mobility Management Entity (MME) in an Evolved Packet Core (EPC). Alternatively, the network management device can be other core network devices, such as Serving Gate Way (SGW), Public Data Network Gate Way (PGW), Policy and Charging Rules Function (PCRF), or Home Subscriber Server (HSS), etc. Embodiments of the disclosure do not limit the implementation form of the network management device 13.

As illustrated in FIG. 2, embodiments of the disclosure provide a method for scheduling a resource for a Hybrid Automatic Repeat request-Acknowledgement (HARQ-ACK) feedback. The method is performed by user equipment (LTE). The method includes the following.

At step S110, Downlink Control Information (DCI) for scheduling two or more Physical Downlink Shared Channels (PDSCHs) in one shot is received.

At step S120, one or more slot positions of one or more PUCCH resources are determined based on slot positions of the two or more PDSCHs and one or more K1 values carried by the DCI. The one or more PUCCH resources are configured to send HARQ-ACK feedbacks of the two or more PDSCHs.

In one embodiment, the LTE receives the DCI, where the DCI is configured to schedule transmissions on PDSCH (also called PDSCHs).

In one embodiment of the disclosure, one DCI may schedule two or more PDSCHs in one shot, where these two or more PDSCHs are all the PDSCHs. Since one DCI can schedule two or more PDSCHs in one shot, instead of scheduling the two or more PDSCHs separately using two or more DCIs, the overhead of signaling scheduling is reduced. The two or more PDSCHs may be at least two PDSCHs.

The number of PUCCH resources determined in step S120 for the PDSCHs may be one or more than one.

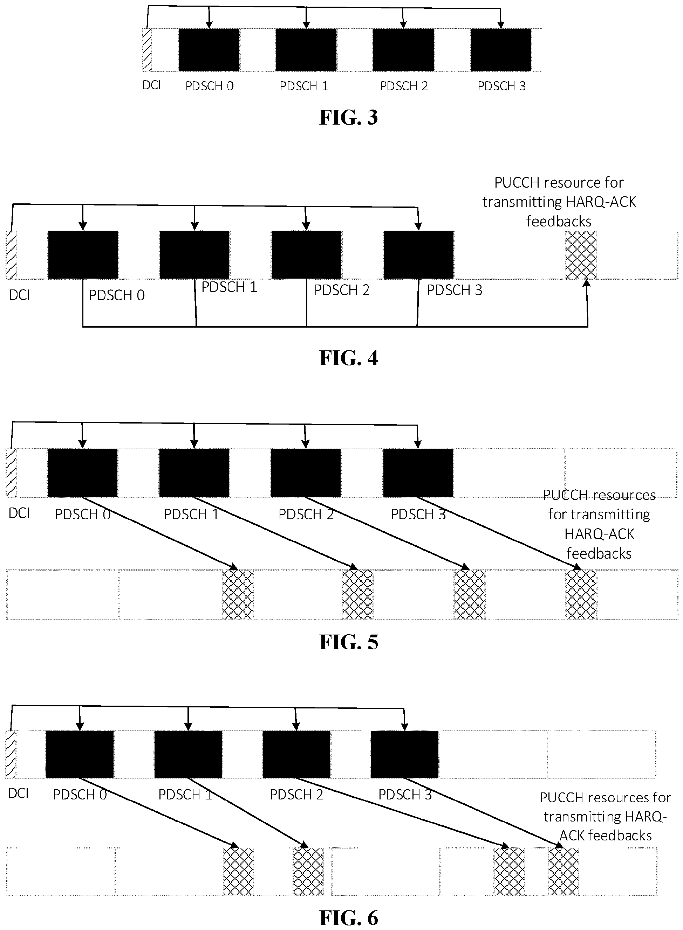

FIG. 3 is a schematic diagram of scheduling 4 PDSCHs in one shot by one DCI. As illustrated in FIG. 3, the 4 PDSCHs scheduled by the DCI are PDSCH 0, PDSCH 1, PDSCH 2 and PDSCH 3 respectively. The PDSCH mentioned here is any information transmitted on the PDSCH, such as service data and/or signaling.

The two or more PDSCHs scheduled by one DCI may not be used for repeated transmissions of the same data block, but are used for transmitting different Transport Blocks (TBs). In addition, the two or more PDSCHs for transmitting corresponding data all need respective transmission feedbacks. These feedbacks needed by the PDSCHs are the aforementioned HRAQ-ACK feedbacks. The HARQ-ACK feedback of one PDSCH may include an Acknowledgement (ACK) or a Negative Acknowledgement (NACK). The ACK indicates that the corresponding PDSCH is successfully received. The NACK indicates that the corresponding PDSCH is not successfully received.

In embodiments of the disclosure, the DCI for scheduling two or more PDSCHs can not only be used to realize the scheduling of the two or more PDSCHs, but also can be used to determine one or more PUCCH resources used for transmitting HARQ-ACK feedbacks of the two or more PDSCHs.

The aforementioned one or more K1 values each may be a time domain offset value. For example, the one or more slot positions of the one or more PUCCH resources for transmitting the HARQ-ACK feedbacks of the two or more PDSCHs determined according to the slot positions of the PDSCHs and the one or more K1 values may be:

P1+K1; where P1 is a respective slot position of each PDSCH, and K1 is the domain offset value. The value of (P1+K1) is the determined slot position of a corresponding PUCCH resource. The K1 value is an integer within a preset value range. For example, the K1 value is, but is not limited to, 0, 4, 8, or 16. The K1 value is a slot interval from the slot position of a PDSCH to the slot position of a corresponding PUCCH resource for transmitting the HARQ-ACK feedback. As an example, if the K1 value is 4, the slot where the PUCCH resource for transmitting the HARQ-ACK feedback of a PDSCH is located is after the slot where the PDSCH is located and these two slots are spaced by an interval of 4 slots.

The slot position can be represented by a serial number of that slot.

Therefore, the DCI can not only used to realize the scheduling of two or more PDSCHs, but also used to realize the scheduling of one or more PUCCH resources for transmitting HARQ-ACK feedbacks of the two or more PDSCHs. Therefore, the technical solution of the disclosure has the characteristics of a small number of DCIs and a large number of scheduled resources. That is, the scheduling of the two or more PDSCHs using one DCI is realized, and at the same time, the indication of one or more PUCCH resources for transmitting the HARQ-ACK feedbacks of the two or more PDSCHs is realized, which has the characteristics of low signaling overhead and high resource scheduling efficiency.

The DCI for scheduling the two or more PDSCHs may carry one or more K1 values that are configured to determine the one or more PUCCH resources for the HARQ-ACK feedbacks of the two or more PDSCHs.

In one embodiment, the DCI carries one K1 value. This K1 value can be used to determine the one or more slot positions of the one or more PUCCH resources for the HARQ-ACK feedbacks of the two or more PDSCHs.

In some embodiments, the S 120 may include the following.

A slot position of one PUCCH resource is determined based on the slot position of a last PDSCH among the two or more PDSCHs scheduled by the DCI and the K1 value. The one PUCCH resource is configured to send a HARQ-ACK feedback codebook of the two or more PDSCHs.

The HARQ-ACK feedbacks of the two or more PDSCHs are transmitted through the HARQ-ACK codebook. At this time, one PUCCH resource is determined for transmitting the HARQ-ACK codebook, which has the characteristics of occupying less resources.

For example, the HARQ-ACK codebook includes multiple bits, and each bit of the HARQ-ACK codebook corresponds to a respective PDSCH feedback. For example, the values "0" and " 1" of this bit respectively represent ACK and NACK of the corresponding PDSCH.

Certainly, depending on the feedback granularity, if the transmission block on one PDSCH is subdivided into multiple code blocks (CBs) and if the HARQ-ACK feedback is about the multiple CBs on one PDSCH, in the HARQ-ACK codebook, the number of bits occupied by one PDSCH equals to the number of CBs contained in the PDSCH.

In one embodiment, one or more bits in the HARQ-ACK codebook may be used to carry the HARQ-ACK feedback of one PDSCH.

In one embodiment, the number of bits of the HARQ-ACK codebook is equal to the number of the PDSCHs scheduled by the DCI.

For example, if one DCI schedules P PDSCHs, the HARQ-ACK codebook includes P bits. Each bit is configured to indicate a feedback whether a respective PDSCH is successful.

Assuming that P = 4, FIG. 4 illustrates the DCI for scheduling 4 PDSCHs at the same time, and one PUCCH resource is used to transmit the HARQ-ACK feedbacks of these 4 PDSCHs.

In some embodiments, determining the one or more slot positions of the one or more PUCCH resources based on the slot positions of the two or more PDSCHs and the one or more K1 values carried by the DCI includes the following.

A slot position of an m^{th} PUCCH resource is determined based on a slot position of an m^{th} PDSCH scheduled by the DCI and the K1 value carried by the DCI.

The m^{th} PUCCH resource is configured to send the HARQ-ACK of the m^{th} PDSCH and m is a serial number of a PDSCH scheduled by DCI.

The two or more PDSCHs scheduled by the DCI may be numbered in Arabic numerals.

In one embodiment, if the serial numbers of the two or more PDSCHs scheduled by one DCI start from 0, the value of m is a natural number, and the value of m is less than the number of PDSCHs scheduled by one DCI. If the serials numbers of the two or more PDSCHs scheduled by one DCI start from 1, the value of m is a positive integer, and the maximum value of m is equal to the number of PDSCHs scheduled by one DCI.

In embodiments of the disclosure, if one DCI schedules two or more PDSCHs, two or more PUCCH resources are determined to respectively transmit the HARQ-ACK feedbacks of the two or more PDSCHs. Each PUCCH resource is configured to transmit one HARQ-ACK feedback of a respective PDSCH.

The specific determination method is: determining a respective PUCCH resource for the HARQ-ACK feedback corresponding to each PDSCH based on the slot position of each PDSCH and a unified K1 value carried by the DCI.

In one embodiment, the DCI carries S K1 values, where the value of S is the number of the PDSCHs scheduled by the DCI.

Determining the one or more slot positions of the one or more PUCCH resource based on the slot positions of the two or more PDSCHs and one or more K1 values carried by the DCI includes the following.

A slot position of an n^{th} PUCCH resource is determined based on the slot position of an n^{th} PDSCH scheduled by the DCI and an n^{th} K1 value carried by the DCI.

The n^{th} PUCCH resource is configured to send the HARQ-ACK of the n^{th} PDSCH, and n is a natural number smaller than the value of S.

Different from the foregoing embodiments that the DCI carries one K1 value, in the embodiment described here, the DCI carries S K1 values. Each K1 value is used in sending the HARQ-ACK feedback of a respective PDSCH scheduled by DCI.

The S K1 values carried by the DCI may be equal or unequal to each other. If the DCI carries the S K1 values, the network side may set the respective K1 values based on the current radio resource scheduling situation and/or the time requirements for HARQ-ACK feedbacks corresponding to PDSCHs, thereby flexibly determining the resources for transmitting the HARQ-ACK feedbacks.

In embodiments of the disclosure, the specific range of the K1 value carried by the DCI may be 0 or any positive integer. That is, the K1 value is a natural number.

The two or more K1 values carried by the DCI may or may not be equal to each other. Assuming that the specific K1 values are not the same, the slot interval between two PUCCH resources for transmitting the HARQ-ACK feedbacks of two adjacent PDSCHs does not match with the slot interval between the two adjacent PDSCHs. As illustrated FIG. 6, this mismatch is reflected in that the slot interval between PDSCH 0 and PDSCH1 is not equal to the slot interval between the PUCCH resources for transmitting the HARQ-ACK feedbacks respectively corresponding to the PDSCH0 and PDSCH1.

In addition, the slot interval between two adjacent PUCCH resources may be sometimes large and sometimes small. As illustrated in FIG. 6, starting from the left side to the right side of FIG. 6, the interval between the slot where the first PUCCH resource is located and the slot where the second PUCCH resource is located is smaller than an interval between the slot where the second PUCCH resource is located and the slot where the third PUCCH resource is located.

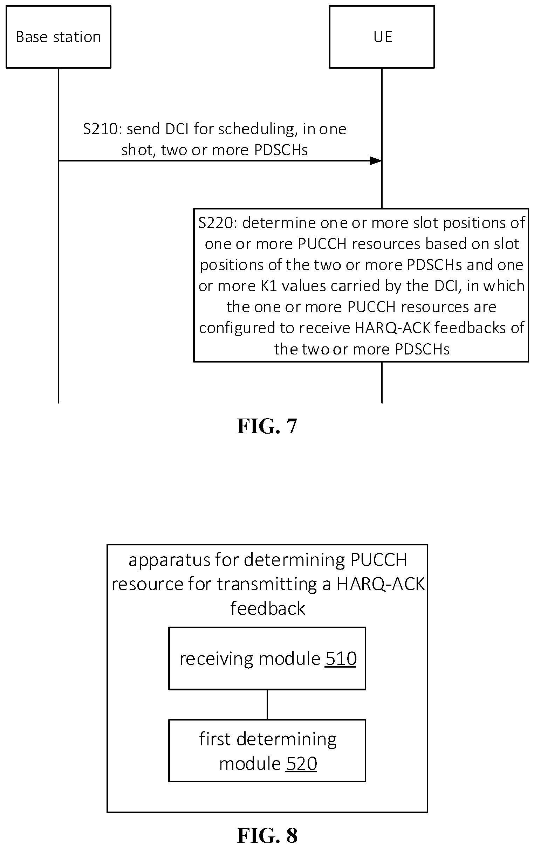

As illustrated in FIG. 7, embodiments of the disclosure provide a method for determining a Physical Uplink Control Channel (PUCCH) resource for transmitting a Hybrid Automatic Repeat request-Acknowledgment (HARQ-ACK) feedback. The method is performed by a base station. The method includes the following.

At S210, Downlink Control Information (DCI) for scheduling two or more Physical Downlink Shared Channels (PDSCHs) in one shot is sent.

At S220, one or more slot positions of one or more PUCCH resources are determined based on slot positions of the two or more PDSCHs and one or more K1 values carried by the DCI. The one or more PUCCH resources are configured to receive HARQ-ACK feedbacks of the two or more PDSCHs.

In one embodiment, the base station will issue a DCI that schedules, at the same time, the two or more PDSCHs, where the DCI will carry one or more K1 values. The one or more K1 values can be used by the UE to determine the one or more PUCCH resources for transmitting the HARQ-ACK feedbacks of the two or more PDSCHs. At the same time, the base station will determine the one or more PUCCH resources to receive the HARQ-ACK feedbacks of the two or more PDSCHs based on the one or more K1 values carried by the DCI.

In one embodiment, the DCI carries one K1 value.

The DCI for scheduling the two or more PDSCHs may carry one or more K1 values.

When the DCI only carries one K1 value, there are multiple ways to determine the one or more PUCCH resources for transmitting the HARQ-ACK feedbacks of the two or more PDSCHs. Two optional ways are provided below.

### First Way:

The S220 may include determining a slot position of one PUCCH resource based on a slot position of a last PDSCH among the two or more PDSCHs scheduled by the DCI and the K1 value. The one PUCCH resource is configured to receive a HARQ-ACK feedback codebook of the two or more PDSCHs.

In the first way, one or more bits in the HARQ-ACK feedback codebook are configured to carry a HARQ-ACK feedback of one PDSCH.

FIG. 4 illustrates scheduling 4 PDSCHs at the same time by the DCI and transmitting the HARQ-ACK feedbacks of the 4 PDSCHs using one PUCCH resource.

In one embodiment, the number of bits of the HARQ-ACK codebook is equal to the number of the PDSCHs scheduled by the DCI.

### Second Way:

The step S220 may include the following.

A slot position of an m^{th} PUCCH resource is determined based on the slot position of the m^{th} PDSCH scheduled by the DCI and the K1 value carried by the DCI.

The m^{th} PUCCH resource is configured to receive a HARQ-ACK of the m^{th} PDSCH and m is a serial number of a PDSCH scheduled by the DCI.

In the second way, if a common K1 value in the DCI is used to determine the slot positions of the PUCCH resources for the two or more PDSCHs, the number of slots by which any two adjacent PUCCH resources among the multiple PUCCH resources determined using the common K1 value are spaced corresponds to the number of slots by which slot positions of the PDSCHs corresponding to the PUCCH resources are spaced.

As illustrated in FIG. 5, since the unified K1 value is adopted, the slot positions of the PUCCH resources corresponding to the PDSCHs may be determined by offsetting the slot positions of the PDSCHs by K1 slots respectively.

The DCI only carries one K1 value shared by the two or more PDSCHs, such that the number of slots by which two adjacent PUCCH resources are spaced is equal to the number of slots by which corresponding PDSCHs are spaced.

The slot positions of the PUCCH resources are determined based on the one K1 value and the slot positions of the two or more PDSCHs.

In this way, one DCI schedules 4 PDSCHs, the DCI carries one K1 value, and the specific K1 value is not limited. According to one K1 value and the slot positions of the 4 PDSCHs, the slot positions of 4 PUCCH resources can be determined.

For each PUCCH resource for transmitting the HARQ-ACK feedback, after the slot position is determined, one PUCCH resource can be selected from a corresponding PUCCH resource set to transmit the HARQ-ACK feedback of a corresponding PDSCH.

In one embodiment, the DCI carries S K1 values, where S is the number of the PDSCHs scheduled by the DCI.

Determining the one or more slot positions of the one or more PUCCH resources based on the slot positions of the two or more PDSCHs and one or more K1 values carried by the DCI includes the following.

A slot position of an n^{th} PUCCH resource is determined based on the slot position of the n^{th} PDSCH scheduled by the DCI and an n^{th} K1 value carried by the DCI.

The n^{th} PUCCH resource is configured to receive the HARQ-ACK of the n^{th} PDSCH, and n is a serial number of a PDSCH scheduled by the DCI.

In one embodiment, the number of K1 values carried by the DCI is the same as the number of PDSCHs scheduled by the DCI, and the number of PUCCH resources each determined by a separate K1 value is the same as the number of K1 values carried by the DCI. Therefore, the slot positions of the PUCCH resources are determined.

In this way, if one DCI schedules 4 PDSCHs and the DCI carries 4 K1 values, the specific values of any two of the 4 K1 values may be equal or unequal. According to the 4 K1 values and the slot positions of the 4 PDSCHs, the slot positions of 4 PUCCH resources can be determined.

For each PUCCH resource for transmitting the HARQ-ACK feedback, after the slot position is determined, one PUCCH resource can be selected from a corresponding PUCCH resource set to transmit the HARQ-ACK feedback of a corresponding PDSCH. As illustrated in FIG. 6, the two or more K1 values carried by the DCI may be equal to each other or not equal to each other.

As illustrated in FIG. 8, embodiments of the disclosure provide an apparatus for determining a Physical Uplink Control Channel (PUCCH) resource for transmitting a Hybrid Automatic request-Acknowledgement (HARQ-ACK) feedback. The apparatus is applied to user equipment (LTE). The apparatus includes the following.

A receiving module 510 is configured to Downlink Control Information (DCI) for scheduling, in one shot, two or more Physical Downlink Shared Channels (PDSCHs).

A first determining module 520 is configured to determine one or more slot positions of one or more PUCCH resources based on slot positions of the two or more PDSCHs and one or more K1 values carried by the DCI. The one or more PUCCH resources are configured to send HARQ-ACK feedbacks of the two or more PDSCHs.

In some embodiments, the receiving module 510 and the first determining module 520 may include program modules. After the program modules are executed by a processor, the receiving of the DCI and the determining of the one or more slot positions of the one or more PUCCH resources for transmitting the HARQ-ACK feedbacks of the two or more PDSCHs are realized.

In other embodiments, the receiving module 510 and the first determining module 520 may include software-hardware combined modules. The software-hardware combined modules may include various programmable arrays. The programmable arrays include, but are not limited to, complex programmable arrays or field programmable arrays.

In still other embodiments, the receiving module 510 and the first determining module 520 may include a pure hardware module. The pure hardware module includes, but is not limited to, an application specific integrated circuit.

In one embodiment, the DCI carries one K1 value.

In one embodiment, the first determining module 520 is configured to determine a slot position of one PUCCH resource based on the slot position of a last PDSCH among the two or more PDSCHs scheduled by the DCI and the K1 value. The one PUCCH resource is configured to send a HARQ-ACK feedback codebook of the two or more PDSCHs.

In one embodiment, the number of bits of the HARQ-ACK feedback codebook is the same as the number of the two or more PDSCHs scheduled by the DCI.

In one embodiment, the first determining module 520 is configured to determine a slot position of an m^{th} PUCCH resource based on a slot position of an m^{th} PDSCH scheduled by the DCI and the K1 value.

The m^{th} PUCCH resource is configured to send the HARQ-ACK feedback of the m^{th} PDSCH, and m is a serial number of a PDSCH scheduled by the DCI.

In one embodiment, the DCI carries S K1 values, and S is the number of the two or more PDSCHs scheduled by the DCI.

The first determining module 520 is configured to determine a slot position of an n^{th} PUCCH resource based on a slot position of an n^{th} PDSCH scheduled by the DCI and an n^{th} K1 value carried by the DCI.

The n^{th} PUCCH resource is configured to send the HARQ-ACK feedback of the n^{th} PDSCH and n is a serial number of a PDSCH scheduled by the DCI.

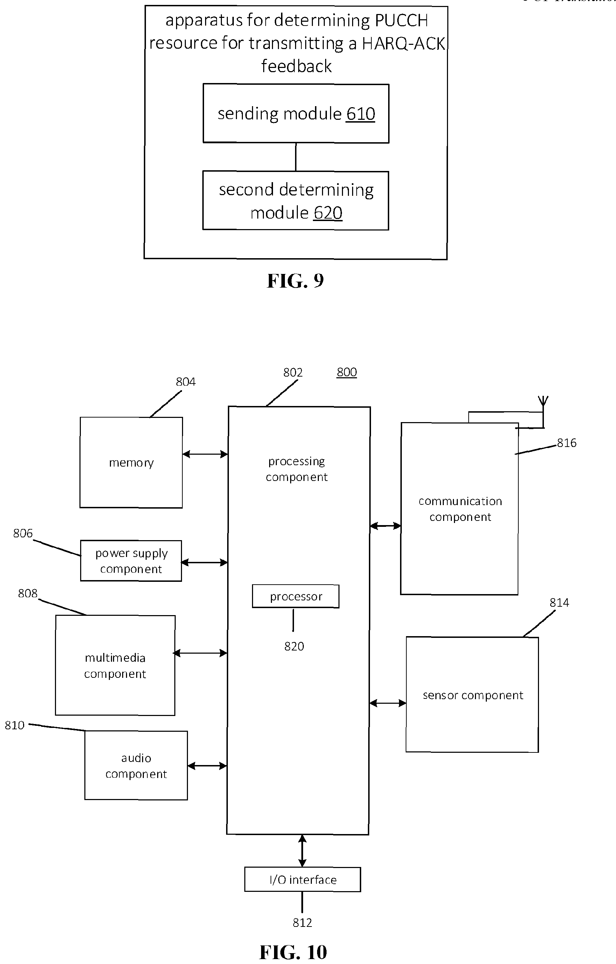

As illustrated in FIG. 9, embodiments of the disclosure provides an apparatus for determining a Physical Uplink Control Channel (PUCCH) resource for transmitting a Hybrid Automatic Repeat request-Acknowledgement (HARQ-ACK) feedback. The apparatus is applied to a base station. The apparatus includes the following.

A sending module 610 is configured to send Downlink Control Information (DCI) for scheduling, in one shot, two or more Physical Downlink Shared Channels (PDSCHs).

A second determining module 620 is configured to determine one or more slot positions of one or more PUCCH resources based on slot positions of the two or more PDSCHs and one or more K1 values carried by the DCI. The one or more PUCCH resources are configured to receive HARQ-ACK feedbacks of the two or more PDSCHs.

In one embodiment, the sending module 610 and the second determining module 620 may include program modules. After the program modules are executed by a processor, the sending of the DCI and the determining of the one or more slot positions of the one or more PUCCH resources are realized.

In other embodiments, the sending module 610 and the second determining module 620 may include software-hardware combined modules. The software-hardware combined modules may include various programmable arrays. The programmable arrays include, but are not limited to, complex programmable arrays or field programmable arrays.

In still other embodiments, the sending module 610 and the second determining module 620 may include a pure hardware module. The pure hardware module includes, but is not limited to, an application specific integrated circuit.

In one embodiment, the DCI carries one K1 value.

In one embodiment, the second determining module 620 is configured to determine determining a slot position of one PUCCH resource based on the slot position of a last PDSCH among the two or more PDSCHs scheduled by the DCI and the K1 value. The one PUCCH resource is configured to receive a HARQ-ACK feedback codebook of the two or more PDSCHs.

In one embodiment, the number of bits of the HARQ-ACK feedback codebook is the same as the number of the two or more PDSCHs scheduled by the DCI.

In one embodiment, the second determining module 620 is further configured to determine a slot position of an m^{th} PUCCH resource based on a slot position of an m^{th} PDSCH scheduled by the DCI and the K1 value.

The m^{th} PUCCH resource is configured to receive the HARQ-ACK feedback of the m^{th} PDSCH, and m is a serial number of a PDSCH scheduled by the DCI.

In one embodiment, the DCI carries S K1 values, and S is a number of the two or more PDSCHs scheduled by the DCI.

The second determining module 620 is further configured to determine a slot position of an n^{th} PUCCH resource based on a slot position of an n^{th} PDSCH scheduled by the DCI and an n^{th} K1 value carried by the DCI. The n^{th} PUCCH resource is configured to receive the HARQ-ACK feedback of the n^{th} PDSCH and n is a serial number of a PDSCH scheduled by the DCI.

### Method One:

Only one PUCCH resource for HARQ-QCK feedbacks is indicated in the scheduling DCI. The HARQ-ACK feedbacks of the scheduled multiple PDSCHs are carried on the indicated one PUCCH resource, that is, the codebook size of the HARQ-ACK codebook on the PUCCH is calculated according to the number of PDSCHs. The slot where the HARQ-ACKs are located is determined based on the slot where the last scheduled PDSCH resource is located and the interval length (i.e., the K1 value) indicated in the DCI. In this way, the HARQ-ACK feedbacks of multiple PDSCHs are placed on one PUCCH resource, which can save feedback resource overhead.

### Method Two:

Only one PUCCH resource for HARQ-QCK feedbacks is indicated in the scheduling DCI. The HARQ-ACK feedbacks (bits) of the scheduled m PDSCHs are respectively carried on the PUCCH resources of m different slots (slots). The PUCCH resource used for the HARQ-ACK feedback in the first time slot is indicated by the DCI, and the other PUCCH resources are sequentially extended backwards. If the slots in which the m PDSCHs are located are not close to each other, but are spaced apart from each other, it may also be considered to set the slot interval (i.e., the K1 value) between the m PUCCH resources. For example, two adjacent PDSCHs in the multiple transmission time interval (TTI) scheduling are spaced by 2 slots, and the slots where the PUCCH resources for transmitting corresponding HARQ-ACK feedbacks are also spaced by 2 slots. Therefore, the HARQ-ACK feedback of each PDSCH can be reported to the base station in time.

### Method Three:

Independent resources for the HARQ-ACK feedbacks of m PDSCHs are directly indicated by the scheduling DCI respectively, that is, the DCI carries m independent K1 values in one shot, which has high flexibility. The resources for the HARQ-ACK feedbacks here are the PUCCH resources used for transmitting the HARQ-ACK feedbacks.

Embodiments of the disclosure provide a communication device including a processor, a transceiver, a memory, and an executable program stored on the memory and executable by the processor. The processor can perform the method for determining a PUCCH resource for transmitting a HARQ-ACK feedback according to any of foregoing embodiments when executing the executable program.

The memory may include various types of storage media. The memory can be a non-transitory computer storage medium that can continue to memorize the information stored thereon after the communication device is powered off. Here, the communication device includes a base station or a terminal.

The processor may be connected to the memory through a bus or the like, for reading the executable program stored in the memory, such as at least one of the methods illustrated in FIG. 2 and FIG. 7.

Embodiments of the disclosure provide a computer storage medium having an executable program stored thereon. After the executable program is executed by a processor, the method according to any of foregoing embodiments, such as at least one of the methods illustrated in FIG. 2 and FIG. 7, is performed.

FIG. 10 is a block diagram of a UE 800 according to embodiments of the disclosure. For example, the UE 800 may be a mobile phone, a computer, a digital broadcast terminal, a messaging device, a game console, a tablet device, a medical device, a fitness device, a personal digital assistant, and the like.

As illustrated in FIG. 10, the UE 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operation of the UE 800, such as operations associated with display, phone calls, data communications, camera operations, and recording operations. The processing component 802 can include one or more processors 820 to execute instructions to perform all or some of the steps of the methods described above. Additionally, the processing component 802 may include one or more modules that facilitate the interaction between processing component 802 and other components. For example, the processing component 802 may include a multimedia module to facilitate the interaction between the multimedia component 808 and the processing component 802.

The memory 804 is configured to store various types of data to support operations of the LTE 800. Examples of such data include instructions for operating any application or method on the LTE 800, contact data, phonebook data, messages, pictures, videos, and the like. The memory 804 may be implemented by any type of volatile or non-volatile storage device or a combination thereof, such as static random access memory (SRAM), electrically erasable programmable read only memory (EEPROM), erasable programmable read only memory (EPROM), programmable read-only memory (PROM), read only memory (ROM), magnetic memory, flash memory, magnetic disk or optical disk.

The power supply component 806 provides power to various components of the UE 800. The power supply component 806 may include a power management system, one or more power supplies, and other components associated with generating, managing, and distributing power to the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swipe, and gestures on the touch panel. The touch sensor can sense not only the boundaries of a touch or swipe action, but also the duration and pressure associated with the touch or swipe action. In some embodiments, the multimedia component 808 includes a front-facing camera and/or a rear-facing camera. When the LTE 800 is in an operation mode, such as a shooting mode or a video mode, the front-facing camera and/or the rear-facing camera may receive external multimedia data. Each of the front-facing and rear-facing cameras can be a fixed optical lens system or have focal length and optical zoom capability.

The audio component 810 is configured to output and/or input audio signals. For example, the audio component 810 includes a microphone (MIC) that is configured to receive external audio signals when the UE 800 is in operating modes, such as call mode, recording mode, and voice recognition mode. The microphone is configured to receive external audio signals. The received audio signal may be further stored in the memory 804 or transmitted via the communication component 816. In some embodiments, the audio component 810 also includes a speaker for outputting the audio signals.

The I/O interface 812 is configured to provide an interface between the processing component 802 and a peripheral interface module. The peripheral interface module may be a keyboard, a click wheel, a button, and the like. These buttons may include, but are not limited to, home button, volume buttons, start button, and lock button.

The sensor component 814 includes one or more sensors for providing status assessment of various aspects of the UE 800. For example, the sensor component 814 can detect the on/off state of the UE 800, the relative positioning of components, such as the display and keypad of the UE 800. The sensor component 814 can also detect a change in the position of the UE 800 or a component of the UE 800, the presence or absence of contact with the UE 800, the orientation or acceleration/deceleration of the UE 800 and the temperature change of the UE 800. The sensor component 814 may include a proximity sensor configured to detect the presence of nearby objects in the absence of any physical contact. The sensor component 814 may also include a light sensor, such as a complementary metal oxide semiconductor (CMOS) or charge-coupled device (CCD) image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the LTE 800 and other devices. The LTE 800 may access a wireless network based on a communication standard, such as Wi-Fi, 2G or 3G, or a combination thereof. In some examples, the communication component 816 receives broadcast signals or broadcast related information from an external broadcast management system via a broadcast channel. In some examples, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In some examples, the LTE 800 may be implemented by one or more application specific integrated circuits (ASICs), digital signal processors (DSPs), digital signal processing devices (DSPDs), programmable logic devices (PLDs), field programmable gate array (FPGA), controller, microcontroller, microprocessor or other electronic component implementation for performing the above method.

In some embodiments, there is also provided a non-transitory computer-readable storage medium including instructions, such as a memory 804 including instructions. The instructions are executable by the processor 820 of the LTE 800 to perform the above method. For example, the non-transitory computer-readable storage medium may be ROM, random access memory (RAM), CD-ROM, magnetic tape, floppy disk, optical data storage device, and the like.

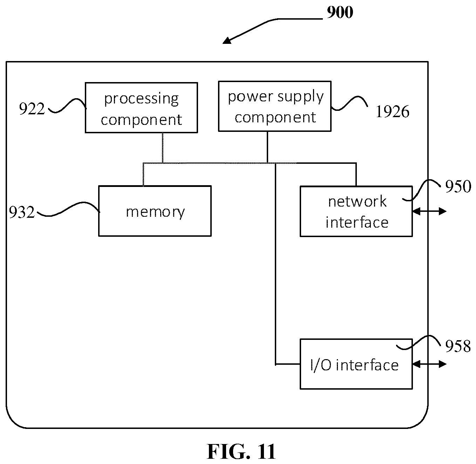

FIG. 11 is a block diagram illustrating a base station in accordance with embodiments of the disclosure. For example, the base station 900 may be a network side device. As illustrated in FIG. 10, the base station 900 includes a processing component 922 and memory resources represented by the memory 932 for storing instructions. The processing component 922 further includes one or more processors. The instructions may be application programs and can be executed by the processing component 922. The application program stored in the memory 932 may include one or more modules, each corresponding to a set of instructions. Further, the processing component 922 is configured to execute the instructions to perform the foregoing method, such as the method according to any of embodiments of the disclosure, such as the method as illustrated in FIG.2 to FIG. 6.

The base station 900 further includes a power component 926 configured to perform power management of the base station 900, a wired or wireless network interface 950 configured to connect the base station 900 to the network, and an input/output (I/O) interface 958. The base station 900 may operate an operating system based on the memory, such as Windows ServerTM, Mac OS XTM, UnixTM, LinuxTM, FreeBSDTM, or the like.

Other implementations of the disclosure will be readily got by those skilled in the art upon consideration of the specification and practice of the disclosure. This disclosure is intended to cover any variations, uses, or adaptations of embodiments that follow the general principles of the embodiments and include those common design and conventional technical means that are not disclosed herein. The specification and examples are to be regarded as examples only, with the true scope and spirit of embodiments of the disclosure being indicated by the following claims.

It is understandable that the embodiments of the disclosure are not limited to the precise structures described above and illustrated in the accompanying drawings and that various modifications and changes may be made without departing from the scope thereof. The scope of embodiments of the disclosure is limited only by the appended claims.

## Claims

1. A method for determining a Physical Uplink Control Channel (PUCCH) resource for transmitting a Hybrid Automatic Repeat reQuest-Acknowledgement (HARQ-ACK) feedback, performed by user equipment (LTE), the method comprising:
receiving Downlink Control Information (DCI) for scheduling, in one shot, two or more Physical Downlink Shared Channels (PDSCHs); and
determining one or more slot positions of one or more PUCCH resources based on slot positions of the two or more PDSCHs and one or more K1 values carried by the DCI, wherein the one or more PUCCH resources are configured to send HARQ-ACK feedbacks of the two or more PDSCHs.

2. The method of claim 1, wherein the DCI carries one K1 value.

3. The method of claim 2, wherein determining the one or more slot positions of the one or more PUCCH resources based on the slot positions of the PDSCHs and the one or more K1 values carried by the DCI comprises:
determining a slot position of one PUCCH resource based on the slot position of a last PDSCH among the two or more PDSCHs scheduled by the DCI and the K1 value, wherein the one PUCCH resource is configured to send a HARQ-ACK feedback codebook of the two or more PDSCHs.

4. The method of claim 3, wherein a number of bits of the HARQ-ACK feedback codebook is the same as a number of the two or more PDSCHs scheduled by the DCI.

5. The method of claim 2, wherein determining the one or more slot positions of the one or more PUCCH resources based on the slot positions of the PDSCHs and the one or more K1 values carried by the DCI comprises:
determining a slot position of an m^{th} PUCCH resource based on a slot position of an m^{th} PDSCH scheduled by the DCI and the K1 value, wherein the m^{th} PUCCH resource is configured to send the HARQ-ACK feedback of the m^{th} PDSCH, and m is a serial number of a PDSCH scheduled by the DCI.

6. The method of claim 1, wherein the DCI carries S K1 values, and S is a number of the two or more PDSCHs scheduled by the DCI;
wherein determining the one or more slot positions of the one or more PUCCH resources based on the slot positions of the PDSCHs and the one or more K1 values carried by the DCI comprises:
determining a slot position of an n^{th} PUCCH resource based on a slot position of an n^{th} PDSCH scheduled by the DCI and an n^{th} K1 value carried by the DCI, wherein the n^{th} PUCCH resource is configured to send the HARQ-ACK feedback of the n^{th} PDSCH and n is a serial number of a PDSCH scheduled by the DCI.

7. A method for determining a Physical Uplink Control Channel (PUCCH) resource for transmitting a Hybrid Automatic Repeat request-Acknowledgement (HARQ-ACK) feedback, performed by a base station, the method comprising:
sending Downlink Control Information (DCI) for scheduling, in one shot, two or more Physical Downlink Shared Channels (PDSCHs); and
determining one or more slot positions of one or more PUCCH resources based on slot positions of the two or more PDSCHs and one or more K1 values carried by the DCI, wherein the one or more PUCCH resources are configured to receive HARQ-ACK feedbacks of the two or more PDSCHs.

8. The method of claim 7, wherein the DCI carries one K1 value.

9. The method of claim 8, wherein determining the one or more slot positions of the one or more PUCCH resources based on the slot positions of the two or more PDSCHs and the one or more K1 values carried by the DCI comprises:
determining a slot position of one PUCCH resource based on the slot position of a last PDSCH among the two or more PDSCHs scheduled by the DCI and the K1 value, wherein the one PUCCH resource is configured to receive a HARQ-ACK feedback codebook of the two or more PDSCHs.

10. The method of claim 9, wherein a number of bits of the HARQ-ACK feedback codebook is the same as a number of the two or more PDSCHs scheduled by the DCI.

11. The method of claim 8, wherein determining the one or more slot positions of the one or more PUCCH resources based on the slot positions of the PDSCHs and the one or more K1 values carried by the DCI comprises:
determining a slot position of an m^{th} PUCCH resource based on a slot position of an m^{th} PDSCH scheduled by the DCI and the K1 value, wherein the m^{th} PUCCH resource is configured to receive the HARQ-ACK feedback of the m^{th} PDSCH, and m is a serial number of a PDSCH scheduled by the DCI.

12. The method of claim 7, wherein the DCI carries S K1 values, and S is a number of the two or more PDSCHs scheduled by the DCI;
wherein determining the one or more slot positions of the one or more PUCCH resources based on the slot positions of the PDSCHs and the one or more K1 values carried by the DCI comprises:
determining a slot position of an n^{th} PUCCH resource based on a slot position of an n^{th} PDSCH scheduled by the DCI and an n^{th} K1 value carried by the DCI, wherein the n^{th} PUCCH resource is configured to receive the HARQ-ACK feedback of the n^{th} PDSCH and n is a serial number of a PDSCH scheduled by the DCI.

13. An apparatus for determining a Physical Uplink Control Channel (PUCCH) resource for transmitting a Hybrid Automatic Repeat request-Acknowledgement (HARQ-ACK) feedback, applied to user equipment (UE), the apparatus comprising:
a receiving module, configured to receive downlink control information (DCI) for scheduling, in one shot, two or more Physical Downlink Shared Channels (PDSCHs); and
a first determining module, configured to determine one or more slot positions of one or more PUCCH resources based on slot positions of the two or more PDSCHs and one or more K1 values carried by the DCI, wherein the one or more PUCCH resources are configured to send HARQ-ACK feedbacks of the two or more PDSCHs.

14. The apparatus of claim 13, wherein the DCI carries one K1 value.

15. The apparatus of claim 14, wherein the first determining module is configured to determine a slot position of one PUCCH resource based on the slot position of a last PDSCH among the two or more PDSCHs scheduled by the DCI and the K1 value, wherein the one PUCCH resource is configured to send a HARQ-ACK feedback codebook of the two or more PDSCHs.

16. The apparatus of claim 15, wherein a number of bits of the HARQ-ACK feedback codebook is the same as a number of the two or more PDSCHs scheduled by the DCI.

17. The apparatus of claim 15, wherein the first determining module is configured to determine a slot position of an m^{th} PUCCH resource based on a slot position of an m^{th} PDSCH scheduled by the DCI and the K1 value, wherein the m^{th} PUCCH resource is configured to send the HARQ-ACK feedback of the m^{th} PDSCH, and m is a serial number of a PDSCH scheduled by the DCI.

18. The apparatus of claim 13, wherein the DCI carries S K1 values, and S is a number of the two or more PDSCHs scheduled by the DCI; and
the first determining module is configured to determine a slot position of an n^{th} PUCCH resource based on a slot position of an n^{th} PDSCH scheduled by the DCI and an n^{th} K1 value carried by the DCI, wherein the n^{th} PUCCH resource is configured to send the HARQ-ACK feedback of the n^{th} PDSCH and n is a serial number of a PDSCH scheduled by the DCI.

19. An apparatus for determining a Physical Uplink Control Channel (PUCCH) resource for transmitting a Hybrid Automatic Repeat request-Acknowledgement (HARQ-ACK) feedback, performed by a base station, the apparatus comprising:
a sending module, configured to send downlink control information (DCI) for scheduling, in one shot, two or more Physical Downlink Shared Channels (PDSCHs); and
a second determining module, configured to determine one or more slot positions of one or more PUCCH resources based on slot positions of the two or more PDSCHs and one or more K 1 values carried by the DCI, wherein the one or more PUCCH resources are configured to receive HARQ-ACK feedbacks of the two or more PDSCHs.

20. The apparatus of claim 19, wherein the DCI carries one K1 value.

21. The apparatus of claim 20, wherein the second determining module is configured to determine a slot position of one PUCCH resource based on the slot position of a last PDSCH among the two or more PDSCHs scheduled by the DCI and the K1 value, wherein the one PUCCH resource is configured to send a HARQ-ACK feedback codebook of the two or more PDSCHs.

22. The apparatus of claim 21, wherein a number of bits of the HARQ-ACK feedback codebook is the same as a number of the two or more PDSCHs scheduled by the DCI.

23. The apparatus of claim 20, wherein the second determining module is further configured to determine a slot position of an m^{th} PUCCH resource based on a slot position of an m^{th} PDSCH scheduled by the DCI and the K1 value, wherein the m^{th} PUCCH resource is configured to receive the HARQ-ACK feedback of the m^{th} PDSCH, and m is a serial number of a PDSCH scheduled by the DCI.

24. The apparatus of claim 19, wherein the DCI contains S K1 values, and S is a number of the two or more PDSCHs scheduled by the DCI; and
wherein the second determining module is further configured to determine a slot position of an n^{th} PUCCH resource based on a slot position of an n^{th} PDSCH scheduled by the DCI and an n^{th} K1 value contained in the DCI, wherein the n^{th} PUCCH resource is configured to receive the HARQ-ACK feedback of the n^{th} PDSCH and n is a serial number of a PDSCH scheduled by the DCI.

25. A communication device, comprising a processor, a transceiver, a memory, and an executable program stored on the memory and executable by the processor, wherein the processor is configured to perform a method of any one of claims 1 to 6 or 7 to 12 when executing the executable program.

26. A computer storage medium, having an executable program stored thereon; wherein when the executable program is executed by a processor, a method of any one of claims 1 to 6 or 7 to 12 is performed.
